# EUROPEAN PATENT APPLICATION

(11) **EP 4 682 731 A1**
(43) Date of publication of application: **21.01.2026**
(21) Application number: 25175606.0
(22) Date of filing: 12.05.2025
(51) Int. Cl.: G06F 15/78

(54) **MULTICORE PROCESSOR SYSTEM AND METHOD FOR DETERMINISTIC DATA PROCESSING IN A DATA PROCESSING UNIT**

(30) Priority: 15.07.2024 DE 102024120099
(71) Applicant: Airbus Defence and Space GmbH, 82024 Taufkirchen (DE)
(72) Inventor: BAHLE, Sandro, 82024 Taufkirchen (DE); BAER, Nicolaus, 82024 Taufkirchen (DE)
(74) Representative: Isarpatent

(57) **Abstract**

The present invention relates to a multicore processor system (1) for deterministic data processing in a data processing unit. Such a system (1) comprises a data processing unit (2) having at least two processor units (3), a common interface unit (5), which is designed to couple the at least two processor units (3) to at least one shared main memory unit of the data processing unit (2) and at least one common further resource (6) of the data processing unit (2). Each processor unit (3) further comprises a respective intermediate storage unit (4) which is coupled to this processor unit (3) and is arranged between the respective processor unit (3) and the common interface unit (5) so that at least one information element for deterministic data processing in the respective processor unit (3) is storable in the intermediate storage unit (4) prior to this deterministic data processing. A method M for deterministic data processing in a data processing unit (2) is further disclosed.

## Description

### TECHNICAL FIELD OF THE INVENTION

The present invention relates to a multicore processor system and a method for deterministic data processing in a data processing unit.

### TECHNICAL BACKGROUND

The use of multiprocessor systems is a common technical solution in many industries and industrial products today for handling increasingly complex tasks in the processing of a wide variety of information.

In this context, multiprocessor systems are data processing units that have two or more processors. Multicore processors can also be used. Such data processing units are used, for example, as servers or high-performance work computers.

The use of multiprocessor systems for conventional aviation products, i.e. the installation of such systems in any flight device, for example in aircraft, is associated with particular safety-related challenges that may not play a significant role for less complex technical devices.

With a multicore processor, applications running on different processing cores often need to access resources shared by a plurality of or all processing cores.

Some of these resources may not allow more than one requestor to access them at the same time. Arbitration logic therefore determines which requestor has exclusive access to a shared resource and possibly how long the requestor may retain these exclusive access rights. Unfortunately, such a concept (though widely used) results in the blocking of the program execution of other requestors.

In many safety-critical applications common in aviation, vehicle manufacture, rail transport and industrial automation, certain tasks need to be performed repeatedly, often several times per second, in a predictable or preset time.

One of the methods used is worst-case execution time analysis. This results in the determination of a reliable upper execution time limit (including an often application-dependent time limit). However, for high-integrity applications (for example, DAL A in avionics software), such a method may need to be very conservative to ensure that no timeouts occur.

In addition, modern multicore processors can have highly complex dependencies in terms of resource utilization within a processing core, between resources of other processing cores (for example, their local command/data caches, TLB), and shared resources that can generally be accessed by a plurality of processing cores (for example, last-level cache, main memory, hardware accelerators, I/O interface blocks). While some of these dependencies may be described in the manuals of the processor manufacturers, the descriptions could be more abstract and omit technical details that are important for successful hardware/software certification.

In addition, information relevant from a certification point of view could have been omitted from the processor manuals to prevent the intellectual property of the processor manufacturers from becoming publicly known. As a result, the upper execution time limits, especially for high-integrity software, need to be set very conservatively to ensure that applications perform their tasks in the specified time. In addition, static analysis approaches for multicore processing systems are impractical and/or unfeasible, and therefore certification authorities do not generally accept them.

Because the upper execution time limit estimates may have been very conservative, the available processing resources cannot be fully utilized. Such a limitation becomes even more severe when high-integrity applications run on the same processor with low-integrity applications, even though they may run on different cores. Unfortunately, increasing the number of cores per processor can force even more conservative estimates and additional time reserves. Worse still, applications may need to be separated according to integrity level and processor (i.e., a multicore processor may only be allowed to run applications that belong to the same integrity level, so that at least one processor is required for each required integrity level). This would conflict with the need to reduce the size, weight, and performance requirements of computer platforms.

In order to keep the utilization of processing resources high, it is important to limit execution time very tightly in the worst case. The creation of such tight limits is possible only if the execution times for all relevant processor operations are either narrowly limited themselves or are deterministic and predictable (preferably as part of a static code analysis). Memory access has been identified over the years and by many researchers as the main cause of variances in application execution times. These variances are caused by the difficulties in predicting when concurrent access to memory (by different processing cores) can occur, the actual architecture of the memory hierarchy of a processor/computer system, but also by the internal operation of the memory technology.

Relevant experts will discuss solutions that address the issues of reducing resource contention, preventing access to memory while an application is running and performing opportunistic code and data prefetching (read operations). Many of the solutions or approaches discussed are based on common hardware solutions without modifying them or adapting them to the actual problem. In particular, no solution seems to focus on the extent to which the problem of write access to shared resources has to be solved, so that it can be regarded as acceptable for security-relevant industries, for example.

Deterministic behavior or the exact prediction of the worst-case execution time of multicore processors has been a research topic for about two decades. Some researchers have recognized that purely static analysis methods for multicore processors are not practicable, and instead suggest probabilistic time analysis techniques. Such probabilistic approaches are currently considered problematic by certification bodies and are therefore unacceptable.

Alternative approaches that address the problem of deterministic memory access are already known from the prior art. For example, the integration of memory blocks with deterministic access times and the allocation of their usage to a preselected thread have already been described. An arbitration logic has already been proposed, in which one processing core executes instructions (without requiring memory access), while another core can access the memory without interference.

However, such a design can quickly become impractical as the number of processing cores increases. This would not only increase costs, but would also mean a certain increase in weight, which in turn is always a feature to be reduced in aviation.

Also, a method for deterministic execution and synchronization of an information processing system is already known, which is limited to two processing cores in which all applications are divided into application tasks and system tasks. Application tasks run on one core and system tasks run on the other.

A further technical solution divides applications into time-critical and non-time-critical sections. It also suggests implementing a real-time processor core and an interruptible processing core. It is also a dual-core design with strict usability limitations and may not (or even not at all) be extensible to processors with more than two processing cores.

A method and system for deterministic multicore execution are further known from the prior art that are applicable to more than two processor cores using resource monitoring. This does not reduce the number of accesses to shared resources and thus ultimately leads to resource conflicts, which may need to be regarded as critical for security-related applications.

Other solutions address replacement strategies for removing data from the cache memory to free up space for other purposes. Other solutions attempt to predict memory access during the running of applications by observing activities in the translation buffer unit and translation control unit.

In general, the approaches, methods and procedures described above can be divided into two classes: on the one hand, the online methods and, on the other hand, the offline methods.

Online methods make decisions to achieve deterministic behavior while an application is running. Offline methods, on the other hand, require a code analysis phase during the software development process. Their result is then used either to determine which thread requires deterministic memory access times, or to identify time-critical code segments.

### SUMMARY OF THE INVENTION

Against this background, an object of the present invention to provide a multicore processor system and a method which at least partially overcome the aforementioned disadvantage.

This object is achieved by a multicore processor system for deterministic data processing in a data processing unit having the features of claim 1 and a method for deterministic data processing in a data processing unit having the features of claim 13.

A multicore processor system for deterministic data processing in a data processing unit is provided according to the invention. Such a system comprises a data processing unit having at least two processor units, a common interface unit which is designed to couple the at least two processor units to at least one shared main memory unit of the data processing unit and at least one common further resource of the data processing unit. Each processor unit comprises an intermediate storage unit that is coupled to this processor unit and is arranged between the respective processor unit and the common interface unit, so that at least one information element for deterministic data processing in the respective processor unit is storable in the intermediate storage unit prior to this deterministic data processing.

A method for deterministic data processing in a data processing unit is further provided according to the invention. It comprises the following steps: providing and activating a multicore processor system according to the invention; operating the multicore processor system so that a deterministic processing of respective implementations, in particular applications, is possible.

An aircraft comprising at least one multicore processor system according to the invention is further provided according to the invention.

One idea of the present invention is therefore to reduce access of the respective processor units to common resources and to the main memory unit of the data processing unit by assigning an intermediate storage unit to each processor unit, said intermediate storage unit being designed to store at least one information element for deterministic data processing in the intermediate storage unit prior to this deterministic data processing. This pre-storage goes far beyond the actual function in terms of a simple cache system.

This new concept therefore reduces the aforementioned access so that this reduction can simultaneously reduce potential resource contention also. The present invention can be easily extended to more than two processor units (also known as processing cores), reduces the number of accesses to shared resources, such as, for example, a common main memory unit (and thus reduces the potential for resource contention), and offers ways to simplify the certification efforts for avionics software when used in the aircraft industry. Furthermore, as long as all memory access of the respective processor units is limited to the intermediate storage unit of the respective processor units, a static time analysis can become possible, thus allowing the calculation of tight execution time limits. The respective intermediate storage units can also be referred to as local processor unit memories.

Since the intermediate storage unit is designed to store at least one information element for deterministic data processing, according to the present invention it correspondingly comprises control elements in addition to the actual storage function. The storage component can also be referred to as a page pool, and the controlling component can also be referred to as a page control unit. In this respect, the intended intermediate storage units comprise a higher functionality than, for example, simple cache systems. The present invention thus provides for directly assigning respective intermediate storage units accordingly to respective processor units, wherein the intermediate storage unit is based on the integration of two hardware components (page pool and page control unit) so that the claimed functionality is providable and the aforementioned advantages of the present invention can be made usable. Cache systems only store fragments online to a very limited extent when the program is actively running, in order to accelerate an active program code. The provided intermediate storage unit, on the other hand, considers all possibilities of the program execution, wherein it is possible to carry out corresponding analyses even in offline mode.

According to a further embodiment of the invention, it is provided that the respective intermediate storage unit has a larger memory volume than a respective cache memory unit of the respective processor unit. According to the invention, the intermediate storage unit must therefore always be designed so that at least one information element for deterministic data processing in the respective processor unit is stored in the intermediate storage unit prior to this deterministic data processing.

According to a further embodiment of the invention, the common interface unit comprises an interconnect/arbitration logic unit. In this way, a first arbitration of the shared resources can take place even before the storage in the respective intermediate storage unit, so that, in the next step, a better assignment to the respective processor units can then be carried out by means of the pre-storage in the respective intermediate storage units.

According to a further embodiment of the invention, it is provided that the at least one common further resource of the data processing unit is selected from: flash memory unit, memory-mapped I/O, RAM, ROM, PCI device.

In this way, a particularly comprehensive system can be provided, which can be used advantageously for a wide range of tasks.

In some embodiments of the invention, it is provided that the respective intermediate storage unit is configured to receive and store, in advance in the intermediate storage unit in offline mode of the data processing unit, at least one information element for data processing in the respective processor unit, so that a deterministic processing of respective implementations, in particular applications, is possible. In this way, it is possible to achieve a time advantage, so that subsequent processes in the respective intermediate storage units can be carried out at least partially in parallel with the actual processing operations in the respective processor units. It is thus advantageously possible to provide a particularly efficient and deterministic system. The respective applications, in particular, and their respective data or information can thus be processed particularly efficiently and deterministically.

According to a further embodiment of the invention, it is provided that the respective intermediate storage unit is further configured to receive and store, in advance in the intermediate storage unit in online mode of the data processing unit, at least one further information element for data processing in the respective processor unit, so that a deterministic processing of respective implementations, in particular applications, is possible. The advantages mentioned above can therefore be achieved even more effectively.

According to a further embodiment of the invention, it is provided that the respective intermediate storage unit comprises first means, which are designed to transmit at least one non-deterministic information element directly to the respective processor unit depending on at least one release indicator of the respective processor unit, so that this at least one non-deterministic information element is processable by the respective processor unit. This ensures a reliable field of application for further applications. In particular, the presented system is therefore fully acceptable also for applications which provide not only the processing of deterministic information but also the processing of non-deterministic information. The at least one release indicator can be provided, for example, in connection with free capacities of the respective processor unit.

According to a further embodiment of the invention, the respective intermediate storage unit comprises second means, which are designed to store configuration data of the respective intermediate storage unit. This means that a system can be provided that is particularly user-friendly.

According to a further embodiment of the invention, the respective intermediate storage unit comprises third means, which are designed to store diagnostic data of the respective intermediate storage unit. This not only results in a user-friendly system, but also enables more effective fulfilment of requirements for comprehensive documentation of the processes performed. The presented system according to the invention can thus be advantageously used, in particular, for industries which have strict safety requirements. The collected diagnostic data can be advantageously used, for example, to generate certification data.

According to a further embodiment of the invention, the respective intermediate storage unit comprises fourth means, which are designed to allow at least two deterministic read and write accesses simultaneously. These fourth means thus enable the presented system to be used advantageously for a wide range of applications.

According to a further embodiment of the invention, it is provided that the fourth means of the respective intermediate storage unit comprise at least one RAM unit, selected from: SRAM unit, SDRAM unit, DPRAM unit. The above-mentioned advantages can therefore be achieved in a particularly specific way.

According to a further embodiment of the invention, the respective intermediate storage unit is designed to arrange received and stored deterministic information in terms of at least one attribute of the respective information, so that the information are serially transmittable to the respective processor unit in the ordered sequence. User-defined processing of individual components of an operation or application is thus advantageously possible.

According to a further embodiment of the invention, it is provided that at least one attribute of the respective information is selected from: earliest time of availability of the information relative to the start time of an application to which the information belongs; determined data processing time of the information in the respective processor unit. Deterministic data processing in the data processing unit can thus be performed particularly efficiently.

In this context, the data processing time can also be referred to as processing time.

### BRIEF SUMMARY OF THE DRAWINGS

The present invention is explained in more detail below with reference to the exemplary embodiments shown in the schematic figures:
- Fig. 1: shows a schematic view of a multicore processor system according to one embodiment of the present invention;
- Fig. 2: shows a schematic view of an intermediate storage unit of a multicore processor system according to one embodiment of the present invention;
- Fig. 3: shows schematically a flowchart of a method for deterministic data processing in a data processing unit using the multicore processor system from Fig. 1;
- Fig. 4: shows a schematic view of an aircraft having a multicore processor system according to one embodiment of the present invention.

In the figures of the drawing, identical, functionally identical and identically acting elements, features and components are denoted in each case with the same reference signs, unless otherwise indicated.

### DESCRIPTION OF EXEMPLARY EMBODIMENTS

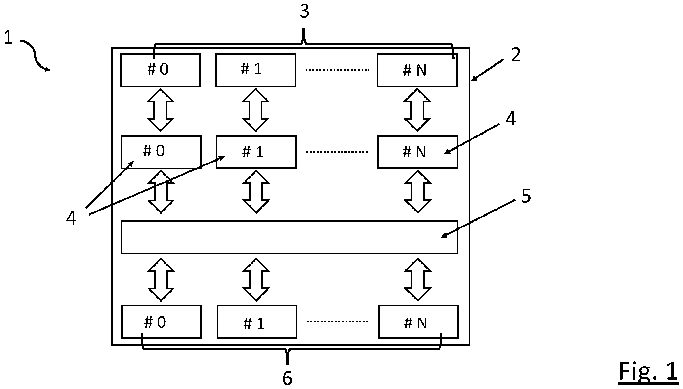

Fig. 1 shows a schematic representation of a multicore processor system 1 according to one embodiment of the present invention. The multicore processor system 1 is generally designed to enable deterministic data processing in a data processing unit.

The multicore processor system 1 is shown for this purpose with a data processing unit 2 having a series of processor units 3. The numbering used (#0, #1, #2 ... #N) simply clarifies that such a multicore processor system 1 can be provided with any number of processor units 3.

Each processor unit 3 is further shown with a respectively associated intermediate storage unit 4. The numbering used (#0, #1, #2 ... #N) simply clarifies here that the number of intermediate storage units 4 is based accordingly on the number of processor units 3.

These intermediate storage units 4 are shown coupled to the respective processor units 3, and also coupled to an interface unit 5. The interface unit 5 is provided in Fig. 1 as a special case in the form of an interconnect/arbitration logic unit. However, alternative components having comparable or extended functionality are conceivable in embodiments that are not shown in detail.

The interface unit 5, shown here in the special form as an interconnect/arbitration logic unit, is in turn coupled to a multiplicity of further resources 6 of the data processing unit 2, wherein at least one of these resources 6 comprises a main memory unit of the data processing unit 2. The numbering (#0, #1, #2 ... #N) used for the illustrated resources 6 simply clarifies here that there can be any number of resources 6, wherein the numbering is independent here from the number of processor units 3.

In this respect, each processor unit 3 in each case comprises an intermediate storage unit 4 that is coupled to this processor unit 3 and is arranged between the respective processor unit 3 and the common interface unit 5, so that at least one information element for deterministic data processing in the respective processor unit 3 is storable in the intermediate storage unit 4 prior to this deterministic data processing.

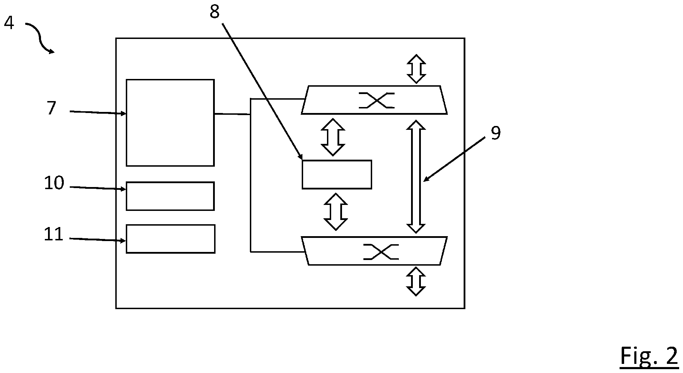

Fig. 2 shows a schematic view of an intermediate storage unit 4 of a multicore processor system 1 according to one embodiment of the present invention.

The intermediate storage unit 4 comprises a state and control logic 7, which is shown at the top left in relation to the image plane and can also be referred to as a page control unit, and a page pool 8, which is shown approximately centrally in relation to the image plane.

In relation to the image plane, the double arrow arranged above the page pool 8 indicates that the buffer storage unit 4 here is connectable to the processor unit 3 (not shown in detail). The double arrow arranged below the page pool 8 correspondingly indicates that the buffer storage unit 4 is connectable here to the interface unit 5 (not shown in detail), for example in the form of an interconnect/arbitration logic unit.

On the one hand, respective connection lines indicate the coupling of the page pool 8 to the state and control logic 7. The intermediate storage unit 4 is designed to provide a connection from the interface unit 5 directly to the processor unit 3 without an intermediate page pool 8 and to provide a connection from the interface unit 5 directly to the processor unit 3 with an intermediate page pool 8. Correspondingly, the intermediate storage unit 4 is further shown with first means 9, wherein these first means 9 are designed to transmit at least one non-deterministic information element directly to the respective processor unit 3 depending on at least one release indicator of the respective processor unit 3, so that this at least one non-deterministic information element is processable by the respective processor unit 3.

The intermediate storage unit 4 is further shown with second means 10, wherein these second means 10 are designed to store configuration data of the intermediate storage unit 4.

The intermediate storage unit 4 is further shown with third means 11, wherein these third means 11 are designed to store diagnostic data of the intermediate storage unit 4.

In one embodiment (not shown in detail) of the intermediate storage unit 4, the latter further comprises fourth means, which are designed to allow at least two deterministic write and read accesses simultaneously.

The present invention thus provides accordingly for the direct assignment of respective intermediate storage units 4 to respective processor units 3, wherein the intermediate storage unit 4 is based on the integration of two hardware components (page pool and page control unit), so that the claimed functionality is providable and the aforementioned advantages of the present invention can be made usable.

The state and control logic 7 has several tasks. Its most important task is to manage the information contained in the page pool 8.

The page pool 8 contains information contained in pages, wherein a page can have (but does not necessarily have) a fixed size, possibly a power of two bytes and greater than the line length of the local cache of processor unit 3. Attributes associated with each page indicate how state and control logic 7 should behave when assigning the page to the page pool 8.

For example, the following situations may occur, as shown in Table 1 below:

**Table 1: Possible page types and behavior of the state and control logic 7**

| **Page type** | **Requested action that is to be carried out for a specific page type** | | | | | |
|---|---|---|---|---|---|---|
| | **Assignment** | | **Deletion** | | **Access** | |
| Code | | • Assignment of space | | • Mark page pool input as unused | | • Deterministic from the page pool |
| | | • Loading of code from the memory backend | | | | |
| Data (read) | | • Assignment of space | | • Mark page pool input as unused | | • Deterministic from the page pool |
| | | • Loading of data from the memory backend | | | | |
| Data (write) | | • Assignment of space | | • Write changed parts of the page back to the memory backend | | • Deterministic from the page pool |
| | | • No loading from the memory backend | | | | • Write back to the memory backend if the page is deleted |
| | | | | • Mark page pool input as unused | | |
| Data (read/write) | | • Assignment of space | | • Write changed parts of the page back to the memory backend | | • Deterministic from the page pool |
| | | • Loading of data from the memory backend | | | | • Write back to the memory backend if the page is deleted |
| | | | | • Mark page pool input as unused | | |
| Stack (fixed size) | | • Assignment of space | | • Mark page pool input as unused | | • Deterministic from the page pool |
| | | • Protect page from deletion | | | | • No write-back required |
| Stack (variable size) | | • Assignment of space | | • Write modified parts of the page back to the memory backend | | • Deterministic from the page pool |
| | | • Protect the page from deletion if it comprises the start of the stack | | | | • Write back to the memory backend if the page is deleted |
| | | | | • Mark page pool input as unused | | |
| | | • Load data from the stack from the memory backend | | | | |
| Volatile | No assignment | | No deletion | | Access is forwarded to the memory backend | |

In this context, for example, the following provisions may apply in one example embodiment of the present invention:
code pages contain instructions that constitute implementations or applications that are executed by a processor unit 3. To ensure deterministic behavior and not invalidate the pre-calculated page access sequences, self-modifying code is not allowed. Code pages therefore allow read access only.

Data pages can be divided into three different variants. Data that are read-only (for example, configuration data or fixed operational parameter sets), data for which write access only is required (for example, output buffers), and memory areas that require read and write access.

Only readable data pages do not need to be written back to the memory backend before the page is removed from the page pool 8. Only writable data pages do not need to be populated by the memory backend before the first access to such pages is allowed.

Data pages with read and write access require the highest workload, which must be performed by the state and control logic 7 and the memory backend: pages in the page pool must be populated before they are accessed for the first time, and any changed storage locations of those pages must be written back to the memory backend.

With a fixed-size stack, the required number of pages that have to be allocated in the page pool is known at compile time, and the initial stack is usually empty.

If the entire fixed-size stack fits into the page pool, a stack of the required size can be assigned to the page pool and the pages can be protected from removal by setting an appropriate attribute.

There is no need to fill the allocated pages with data since the initial stack is empty. Furthermore, provided that the content of the stack is no longer relevant once the operation or application has completed its work within the allotted time, the stack is empty again, so no data has to be written to the memory backend before the pool pages connected to the stack are marked as unused.

Variable-size stacks that do not fit into the page pool or should not be prevented from being removed could be viewed similar to data pages with read/write access. However, one possible difference is that the stack page containing the top of the stack and other pages near the top of the stack can still be protected from being removed from the page pool.

Storage areas marked as "volatile" never occupy space in the page pool. However, the state and control logic 7 is made aware of these memory areas to ensure that all memory access is forwarded to the memory backend without the intervention of the state and control logic 7. Technically speaking, this page type allows the state and control logic 7 to be bypassed in order to gain direct access to the main memory (see Fig. 2 and "page pool bypass").

The design of the state and control logic 7 could be provided in embodiments of the present inventions as follows:
A "page sequence list" containing entry points to another list that contains the page access sequences that are actually possible is maintained within the state and control logic 7. An entry is added to the page sequence list for each code page.

This entry contains (possibly along with other elements also) a reference to the page access sequence list (PASL) and the number of continuous PASL entries that must be taken into account in the state and control logic 7.

Each PASL entry describes the type of page (including memory address range, specific attributes, and the earliest time at which the page must be accessed relative to the operation or application start time) that is most likely to be accessed when code from the associated code page is executed. The state and control logic 7 uses this information to decide which of the pages in the page pool must be allocated/pre-populated.

The actual processing sequence for these pages may depend on various factors, such as the estimated time it takes to allocate/prepopulate these pages, the deletion of pages to free up enough space for the new pages, or the time when the pages must be available for access.

In addition, each of the PASL entries can provide notes indicating which memory sections within a particular page should be loaded first. This means that the contents of a page do not necessarily have to be loaded as a linear byte sequence, starting at the beginning of the memory area of the page.

Instead, the memory segments of the page that are needed first could be loaded immediately, while the remaining page data are retrieved later from the memory backend.

The loading of code or data pages (including the stack) from the main memory into the page pool or the writing of pages from the page pool back to the main memory is expected to be completely transparent to the applications running on the processor unit 3, including the state and control logic 7 as part of the intermediate storage unit 4.

This means that the data transfers take place (at least most of the time) in the background, because the page pool allows simultaneous access via at least two different data/address/control paths. At least one data/address/control path is used by the state and control logic 7 to swap pages into and out of the page pool.

Additional data/address/control paths are used by the processor units 3 (at least one path per processor unit 3), which are connected to a specific state and control logic 7 so that they can access the code, data, and stack.

Additional functions can become part of the state and control logic 7. Their purpose is to reduce software development effort by providing diagnostic data and potentially creating evidence/artefacts required for software certification. Diagnostic data could contain information relating to pages that were not loaded into the page pool but were required. It could also be recorded if pages were loaded into the page pool, but the required data arrived too late, causing delays in read or write access to the memory. Access to this type of information helps software developers reorganize the executable code or the data (structures) with which the code operates.

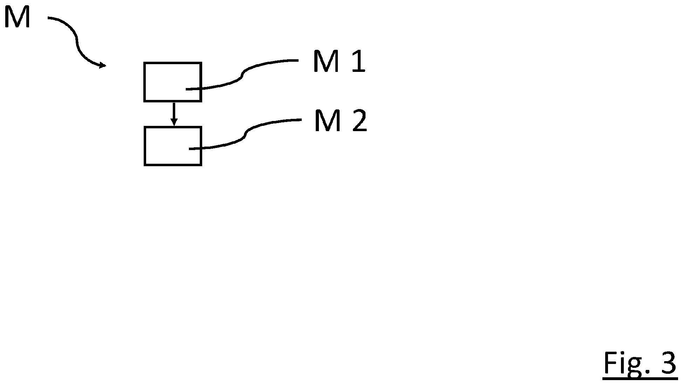

Fig. 3 shows schematically a flowchart of a method M for deterministic data processing in a data processing unit 2 using the multicore processor system 1 from Fig. 1. A multicore processor system 1 according to the invention is provided and activated in a first method step M1. The multicore processor system 1 according to the invention is operated in a second method step M2, so that a deterministic processing of respective implementations, in particular applications, is possible.

In this respect, it can essentially be assumed that embodiments of the present invention comprise two components. The first part requires an analysis of the implementations or applications in order to learn more about the memory access patterns of the implementations or applications (offline method). In the second part, the collected information is used to configure the processing hardware so that a highly deterministic behavior is achieved for either all or specific implementations or applications.

Operations or applications generally consist of separate memory segments for the code, data, and stack. Each of these memory segments is finally divided (for the purpose and application of this invention) into smaller parts, referred to as pages.

During the actual execution of the applications, the state and control logic 7 makes these pages available in the page pool (i.e., the memory tightly coupled to the respective processor unit 3) before they are actually needed for read or write access.

Control flow analysis could provide the facility to determine which code, data, and stack pages are needed at each stage of the execution of an application. Although conditional jumps in the code may not be fully predictable without knowing which data are being processed, a list of candidate pages can be compiled automatically during the control flow analysis phase. In addition, (source) code annotations provided by the application software developers could indicate which code (i.e. jump destinations) and which data pages are possibly accessed at specific locations in the executable code, thereby limiting the list of required pages and/or increasing the likelihood that certain pages will be needed.

Once this information is collected, compilers and/or linkers, possibly with the support of experienced software developers, can rearrange the code to minimize the number of code pages required for the most time-critical or interference-prone code paths.

Similarly, data structures in the data segment could be rearranged to reduce the number of data pages required, but also to determine the most likely page access sequences for code pages and data pages.

Finally, the compiler, linker, or special stack usage analysis tools can be used to determine the number of stack pages required by an application.

Finally, the offline method of this invention generates information relating to the code, data, and stack page access patterns, referred to as page access sequences.

This information is then used to configure the state and control logic 7 so that it can load the required code, data, and stack pages into the page pool before they are first accessed, resulting in deterministic memory access times as perceived by the operation or application running on the processor unit 3.

The data transfer mechanism between the main memory and page pool is not part of this invention. However, means must be implemented to ensure that high-priority applications or time-critical applications allow the state and control logic 7 to transfer data between the page pool and main memory without blocking the application.

This could, for example, additionally supplement the system presented here by means of deterministic time management and a time management unit for multicore processors. In short, the data transfer between the main memory and the page pool could be based on the priorities of the tasks that are performed on all cores of a multicore processor. Higher-priority tasks are more likely to have access to the main memory interface than low-priority tasks.

This makes it less likely that high-priority tasks will stall due to unavailable pages in the page pool, while low-priority tasks may suffer additional delays when attempting to access shared resources.

The invention can be based in further embodiments on a plurality of hardware components and is described below (for the sake of simplicity) for a system containing only two processor units 3.

Each processor unit 3 is connected to a state and control logic 7, which in turn is connected to a TCM (Tightly Coupled Memory) block and to the system connection. A respective TCM block is therefore a component of the respective intermediate storage unit and can be regarded accordingly as a possible execution variant of a simple page pool. However, in an alternative embodiment, it is similarly possible for the TCM block to be located in the page pool 8 along with other components there.

The TCM block must allow at least two fully deterministic read and/or write operations simultaneously. One possible implementation that provides these capabilities is known, for example, as dual-ported static RAM (SRAM). The two memory access paths to the TCM are necessary to allow deterministic access to the memory block by the processing core that is connected (via the state and control logic 7), and to allow the state and control logic 7 to populate the TCM with data from other (possibly non-deterministic) storage devices and to write data from the TCM back to specific storage devices.

As a prerequisite, some offline tools have generated a list of code, data, and stack pages and the order in which they are most likely to be accessed; referred to as the page access sequence list (PASL).

For each page, annotations are provided that indicate the time (possibly in relation to the start of the task to which these pages belong) at which access to these pages is required, the type of access (read or write), and the address or address area within these pages that is most likely to be accessed first.

Equipped with this statically obtained information, the following actions are performed by the processor unit 3 in conjunction with a routine part that is part of the operating system (for example, the task scheduler).

For example, in embodiments of the present invention, it can be assumed that there is one task scheduler per processor unit 3. However, an implementation with a task scheduler that manages a plurality of processor units 3 has no influence on the essential behavior that is at the heart of this invention.

An alternative description of the presented method could be provided in embodiments of the present invention as follows:
Initially, either the state and control logic 7 is configured during the initialization of the processor hardware and the startup of the operating system, or this task is transferred to the actual task scheduler of the processor unit 3. In both cases, the state and control logic 7 receives the statically obtained information about the required code, data, and stack pages along with all relevant annotations, as described above.

A task scheduler then determines which task will be performed next on the respective processor unit 3. It informs the appropriate state and control logic 7 of the next relevant page access sequence. The state and control logic 7 can store a plurality of page access sequences that belong to one or more tasks. The scheduler is instructed (as part of the software configuration and possibly status data) which page access sequence to activate.

The state and control logic 7 then begins to set up the page pool (tightly coupled memory) by offloading other pages using the rules specified in Table 1.

The state and control logic 7 then analyzes the page access sequence to determine which pages need to be loaded into the page pool, and also creates the (immediately required) stack pages.

The task scheduler then finally activates the task (i.e. allows it to be executed on the processor unit 3), which is also recognized by the state and control logic 7.

The state and control logic 7 then continuously analyzes the activated page access sequence to load required data from a (possibly) non-deterministic memory backend into the page pool and to offload pages (according to the rules specified in Table 1) to free up memory space. The ultimate goal is for the state and control logic 7 to be always one step ahead of the task execution when it comes to making code and data available in the page pool (tightly coupled memory) that will soon be needed for read and/or write access.

Access to non-offloaded memory locations is forwarded to the memory backend without the intervention of the state and control logic 7.

While the state and control logic 7 loads and offloads pages into and from the page pool, it can collect diagnostic data for the page process and some memory accesses in order to help developers develop software and gather information relating to some aspects of software certification. These data could also indicate whether pages were loaded long before the first actual access and were available in the TCM (and at what time interval). They could also record cases where pages were not immediately available when needed.

A processor unit 3 can be considered in embodiments of the present invention as a hardware device that executes instructions (for example, hard-coded, microcode, software loaded via operating systems) or, for example, a hardware accelerator (for example, a network interface, UART, I2C, TWI, CAN, frame manager, cryptographic processing units, Al accelerator, GPU).

A processor unit 3 can run a plurality of threads, wherein some resources within the core can also be shared between the threads.

The state and control logic 7, in conjunction with the connected page pool, enables deterministic memory access times. This enables the worst-case execution time to be determined within very narrow limits, even for highly complex multicore processor architectures. In addition, the reduced number of interfering sources simplifies analysis and testing, thus reducing the cost of certifying future avionics platforms having multicore processors.

Each processor unit 3 is connected to a memory block with deterministic access times, to which no other processor unit 3 has access. The data contained in this deterministically operating memory block (page pool) are either obtained by accessing non-deterministic working memory via a so-called state and control logic 7, or are written by the connected processor unit 3 to the deterministically operating memory.

In this respect, the present invention comprises the aforementioned state and control logic 7 as a component of the intermediate storage unit 4, its operation and implementation details and the methods required for the proper configuration of the state and control logic 7. In addition, the invention can have additional functions to reduce the workload for developers of highly integrated software. Finally, they can help create data (diagnostic data) for some artefacts that are required for certifying multicore processing software.

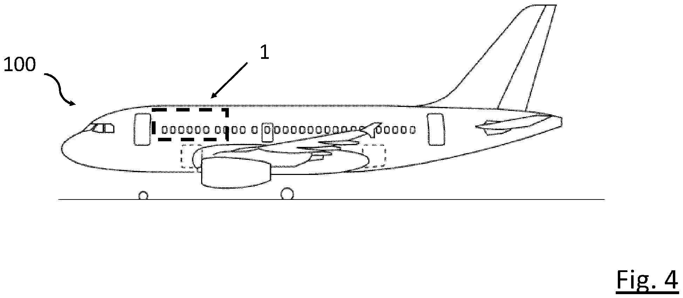

Fig. 4 shows a schematic view of an aircraft 100 having a multicore processor system 1 according to one embodiment of the present invention.

### REFERENCE SIGN LIST

- 1: Multicore processor system
- 2: Data processing unit
- 3: Processor unit
- 4: Intermediate storage unit
- 5: Interface unit
- 6: Resource
- 7: State and control logic
- 8: Page pool
- 9: First means
- 10: Second means
- 11: Third means
- 100: Aircraft
- M: Method
- M1 - M2: Method steps

## Claims

1. Multicore processor system (1) for deterministic data processing in a data processing unit (2), comprising a data processing unit (2) having at least two processor units (3), a common interface unit (5), which is designed to couple the at least two processor units (3) to at least one shared main memory unit of the data processing unit (2) and at least one common further resource (6) of the data processing unit (2), **characterized in that** each processor unit (3) has an intermediate storage unit (4) which is coupled to this processor unit (3) and is arranged between the respective processor unit (3) and the common interface unit (5), so that at least one information element for deterministic data processing in the respective data processing unit (3) is storable in the intermediate storage unit (4) prior to this deterministic data processing.

2. Multicore processor system (1) according to Claim 1, wherein the respective intermediate storage unit (4) has a larger storage volume than a respective cache memory unit of the respective processor unit (3).

3. Multicore processor system (1) according to Claim 1, wherein the common interface unit (5) comprises an interconnect/arbitration logic unit.

4. Multicore processor system (1) according to Claim 1 or Claim 2, wherein the at least one common further resource (6) of the data processing unit (2) is selected from: flash memory unit, memory-mapped I/O, RAM, ROM, PCI device.

5. Multicore processor system (1) according to one of the preceding claims, wherein the respective intermediate storage unit (4) is configured to receive and store at least one information element for data processing in the respective processor unit (3) in advance in the intermediate storage unit (4) in the offline mode of the data processing unit (2), so that a deterministic processing of respective implementations, in particular applications, is possible.

6. Multicore processor system (1) according to claim 4, wherein the respective intermediate storage unit (4) is further configured to receive and store at least one further information element for data processing in the respective processor unit (3) in advance in the intermediate storage unit (4) in the online mode of the data processing unit (2), so that a deterministic processing of respective implementations, in particular applications, is possible.

7. Multicore processor system (1) according to the preceding claims, wherein the respective intermediate storage unit (4) comprises first means (9) which are designed to transmit at least one non-deterministic information element directly to the respective processor unit (3) depending on at least one release indicator of the respective processor unit (3), so that this at least one non-deterministic information element can be processed by the respective processor unit (3).

8. Multicore processor system (1) according to one of the preceding claims, wherein the respective intermediate storage unit (4) comprises second means (10) which are designed to store configuration data of the respective intermediate storage unit (4).

9. Multicore processor system (1) according to one of the preceding claims, wherein the respective intermediate storage unit (4) comprises third means (11) which are designed to store diagnostic data of the respective intermediate storage unit (4).

10. Multicore processor system (1) according to one of the preceding claims, wherein the respective intermediate storage unit (4) comprises fourth means which are designed to allow at least two deterministic read and write accesses simultaneously.

11. Multicore processor system (1) according to Claim 10, wherein the fourth means of the respective intermediate storage unit (4) comprise at least one RAM unit, selected from: SRAM unit, SDRAM unit, DPRAM unit.

12. Multicore processor system (1) according to one of the preceding claims, wherein the respective intermediate storage unit (4) is designed to arrange received and stored deterministic information relating to at least one attribute of the respective information so that the information is serially transmittable to the respective processor unit (3) in the ordered sequence.

13. Multicore processor system (1) according to Claim 12, wherein the at least one attribute of the respective information is selected from: earliest time of availability of the information relative to the start time of an application to which the information belongs; determined data processing time of the information in the respective processor unit (3).

14. Method (M) for deterministic data processing in a data processing unit (2) comprising the following steps:
• providing and activating a multicore processor system (1) according to one of Claims 1 to 13;
• operating the multicore processor system (1) so that a deterministic processing of respective implementations, in particular applications, is possible.

15. Aircraft (100) comprising at least one multicore processor system (1) according to any one of Claims 1 to 13.
